# EUROPEAN PATENT APPLICATION

(11) **EP 4 015 420 A1**
(43) Date of publication of application: **22.06.2022**
(21) Application number: 21214584.1
(22) Date of filing: 15.12.2021
(51) Int. Cl.: B65G 37/00, B65G 47/90, B65G 61/00, B65G 59/02

(54) **METHOD OF MACHINE DISASSEMBLY OF A STACK OF BOUND COLUMNS OF FOLDED STACKABLE CRATES AND DEVICE FOR PERFORMING THIS METHOD**

(30) Priority: 21.12.2020 CZ 20200701
(71) Applicant: Media CZ s.r.o., 46001 Liberec 1 (CZ); WashingTone Technologies s.r.o., 14900 Praha 4 (CZ)
(72) Inventor: Novák, Jaroslav, 51261 P epe e (CZ)
(74) Representative: Sedlák, Jirí

(57) **Abstract**

The machine-disassembly method for the stack, wherein all the crates in one tier are removed simultaneously, wherein each crate is gripped mechanically in at least one point during the removal, lifted and moved onto a conveyor. The device for machine-disassembly of a stack has a take-out module having a grasping bar anchored to a supporting structure of the take-out module by a movable arm via pivoting connections, wherein the movable arm is driven, and the grasping bar has at least four mechanical grips.

## Description

Plastic collapsible crates are widely used in food processing as well as in industry where they are used for transportation, stocking up or out. The crates are often used to transport vegetables, fruit or meat, but they can also be used in the automotive industry to transport components. The two most common sizes of crates in circulation are the small crate with a length of 39 to 41 cm and a width of 29 to 31 cm, and the large crate with a width of 39 to 41 cm and a length of 58 to 62 cm. The crate height can vary from approximately 5 cm up to 30 cm. An exemplary crate cycle can be demonstrated, for example, by the delivery of apples to a supermarket chain: in an apple orchard, apples are put into plastic crates and then transported to an intermediate warehouse or directly to the warehouse of a particular food supply chain. From the warehouse, the apples in crates are transported directly to the supermarket chain's store, where they are displayed on the sales floor, often together with the crate. When all the apples in the crate have been bought up, the chain's personnel collapse the crate and places it on a pallet in the warehouse for removal.

This is the breaking point of the entire crate cycle.

Then, the crates will be taken to a washing line, checked for damage and put back into service. Since there is no washing line capable of washing both small and large crates, it is necessary to sort the crates into small and large and stack them on pallets in columns in the supermarket chain's warehouse. Thus, the large crates are stacked in columns on one pallet, and the small crates are stacked in columns on the other pallet, After transport to a washing depot, the crates stacked on the pallet are manually separated into individual columns of small crates and individual columns of large crates. There is already a scanning machine to process the individual columns of small or large crates; this machine takes one top crate from the column and places it on a conveyor or lifts the entire column of crates and lowers only one bottom crate on the conveyor at a time. However, there is currently no machine able to process a column of mixed small and large crates or even a whole stack of bound columns of mixed small and large crates. Thus, such a stack is not even compiled as it cannot be reprocessed.

Supermarket personnel must ensure that large and small crates are strictly separated; otherwise, machine dismantling and washing of the crates are not possible.

The open crate for filling with goods has two longitudinal sidewalls and two transverse sidewalls assembled and interlocked. The crates are reusable and collapsible, i.e. when the crate is empty, it is collapsed into a flat item, usually up to 5 cm in height, with the side and longitudinal sidewalls folded from the vertical position to the horizontal position, lying on the inside of the crate bottom. A stacking edge is usually created at the lower side of the crate bottom. The crates collapsed in such a way are stacked on pallets and transported for further use.

### Description of the Invention

**A new, user-simplified system for handling and storing crates has been created. We have developed a system for the joint storage of small and large crates, which greatly simplifies the handling of crates in dealers' warehouses, where only one pallet storage space is now required, compared to the current two-pallet storage space for each size of crates separately. This specifically stacked stack is suitable for disassembling using a method for machine disassembly of a stack of bound columns of collapsed stackable crates, preferably utilizing a machine-disassembly device.**

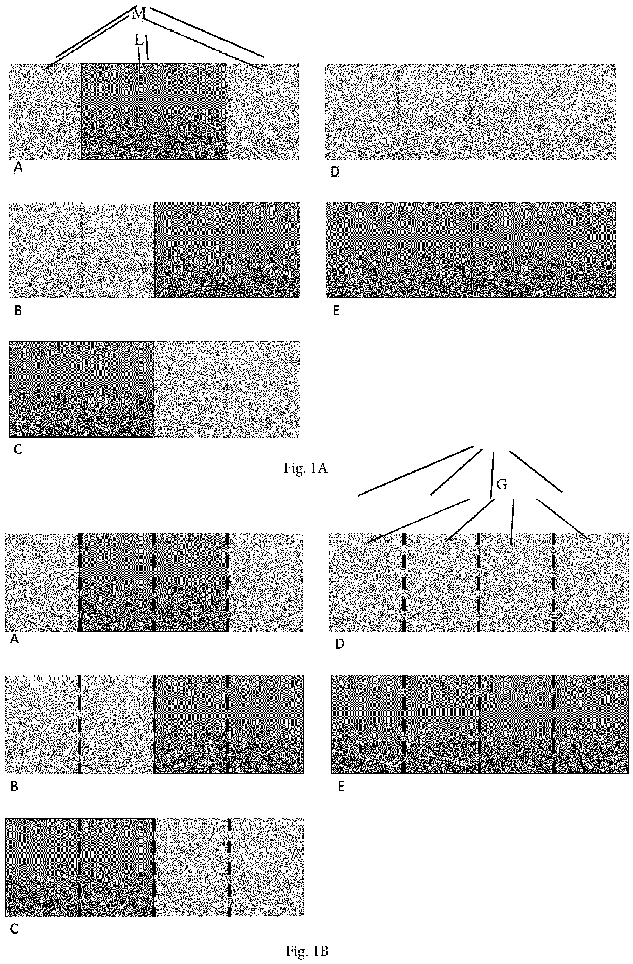

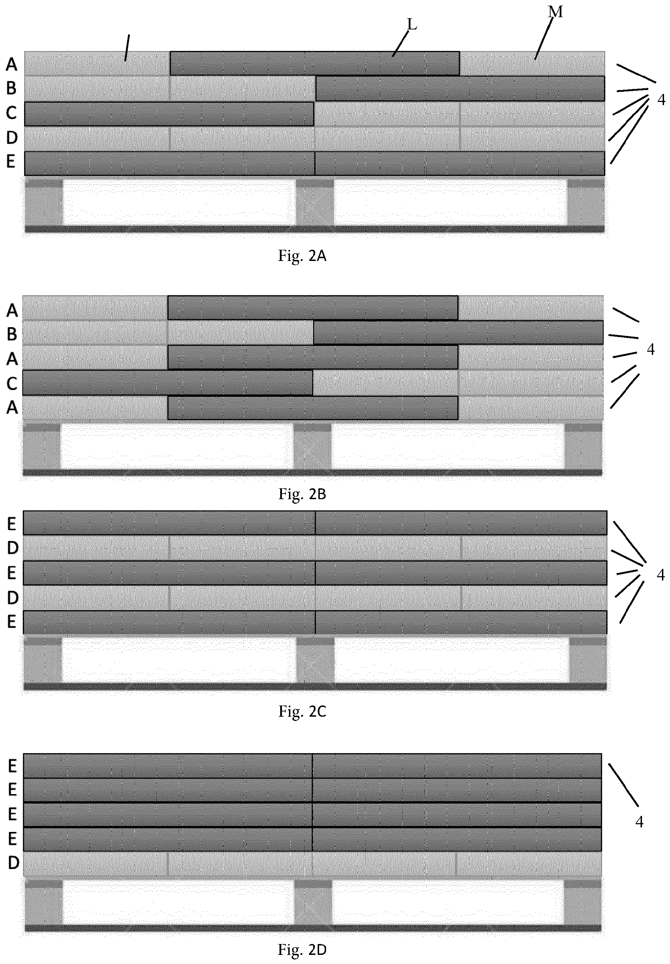

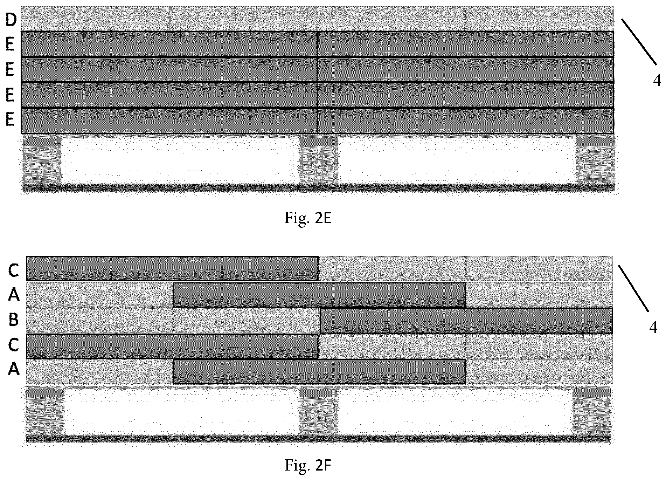

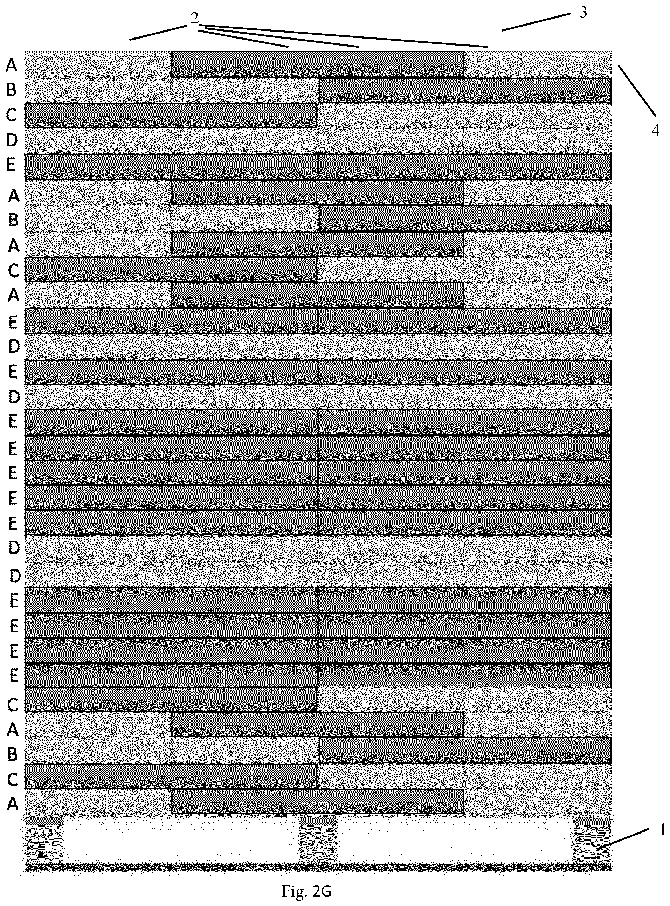

The bound columns of the collapsed crates are simply stacked on the pallet like bricks for building a wall. Unlike bricks in a wall, however, there is no need to tie each row of the column, so the collapsed crates are simply stacked on a pallet as such as they come in hand. If a Euro pallet and crates of two sizes are available - a small crate M with a length of 39 to 41 cm and a width of 29 to 31 cm, and a large crate L with a length of 58 to 62 cm and a width of 39 to 41 cm, assuming that the entire area of the Euro pallet having a dimension of approximately 120 cm × 80 cm needs to be filled, there is no alternative but to stack the crates on the pallet in two separate stacks. One stack is 116-124 cm long and 39-41 cm wide. Such a stack contains layers of crates, wherein it does not matter how the layers of small and large crates are stacked. Thus, one layer of the stack can be created/stacked using one of the following combinations: MLM MML, LMM, MMMM, LL, where M is the small crate, and L is the large crate. The combination is shown in Figure 1A. At least 2 layers with different combinations are always present in one stack, which will tie the columns, and such a stack cannot be divided into smaller columns. However, layers of all five combinations or only four or only three can be present in one stack, Figures 2. Thus, one stack is the smallest unit that cannot be further divided into sub-columns. At the same time, one stack, or one tier of the stack, is imaginarily divided into four transverse segments, which are placed side by side. All transverse segments have the same dimensions: a length of 39 to 41 cm and a width of 29 to 31 cm. Thus, the size thereof corresponds to the small crate M. One small crate M covers one transverse segment and one large crate L covers two transverse segments, as shown in Figure 1B.

**Standard machines cannot cope with such a stack with bound columns; therefore, a device for machine-disassembly of such a stack has been developed, and the stack itself has been defined so that it could be disassembled by the device as well as the method for this machine-disassembly.**

The machine-disassembly method for the above-described mixed stack consists of all the crates in one tier being removed simultaneously, and, during the removal, each crate is gripped in at least one point, lifted and moved onto a conveyor.

The collapsed crate, namely the crate base with folded sidewalls, which is formed by the crate bottom and the raised edge thereof, where the sidewalls are anchored in hinges and, when folding the sidewalls, these sidewalls fit the level of the raised edge and, therefore, the edges of the base do not overlap.

Preferably, each crate is mechanically grasped with clamping at opposite sides of the crate base or with gripping in at least one point. The raised edge of the crate base or the side(s) of the folded sides thereof that fit into the raised edge is used to grip the crate. Mechanical gripping of the crate is preferably realized by a clamp or click or by paired gripping fingers or paired gripping bar.

The clamp for gripping the crate represents a classic mechanical method simulating the grip with the index finger and thumb. Usually, the clamp grips the crate on the base side or the side of the folded sidewalls placed in the raised edge of the base. Thus, the clamps approach the crate from the side, having the jaws open and, after contact with the crate, the jaws clamp to fix the crate. Two clamps are more preferable for a single crate to prevent the crate from tilting out of the grip.

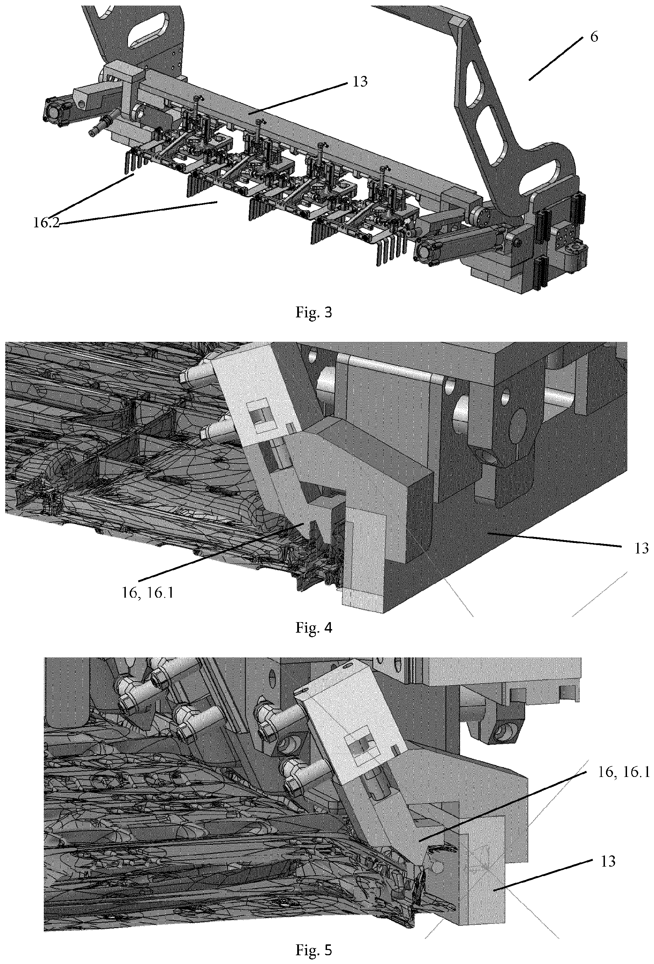

The click for crate attachment uses crate profiling. The click is shown in Figures 4 and 5. The click is shaped so that it can approach the crate from above at an angle of 45° to 90° and thus fit into the profiling of the bottom/base of the given crate. The click usually has a stopping surface, which can be, for example, a grasping bar. Thus, the click fits into the crate and pulls the crate, arriving with the edge against the stopping surface, thereby fixing the crate to lift and move it in a similar way to the clamp.

Paired gripping devices are located on the segment edges at the time of gripping and grip the crate from both longer sides.

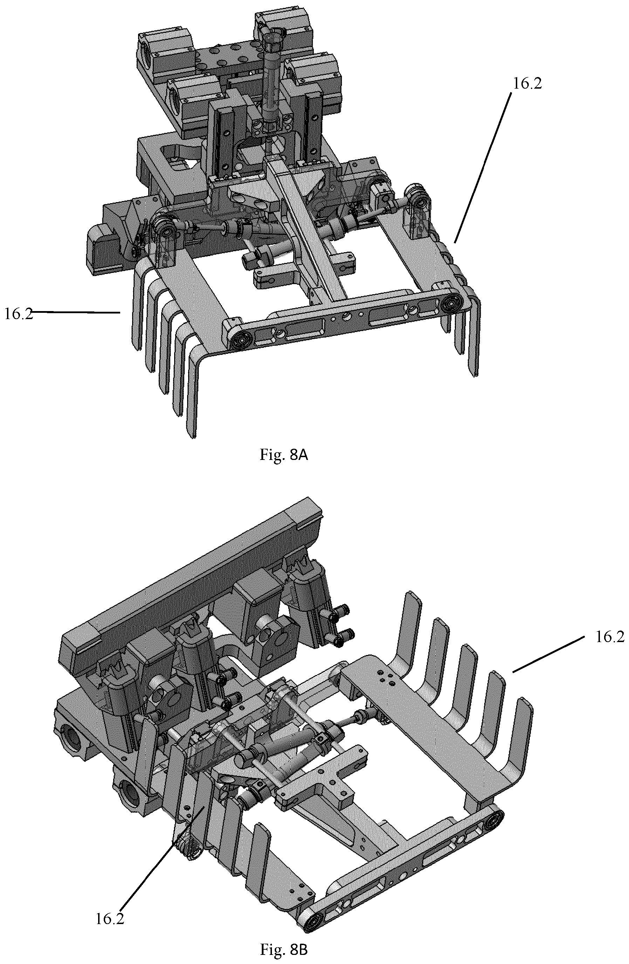

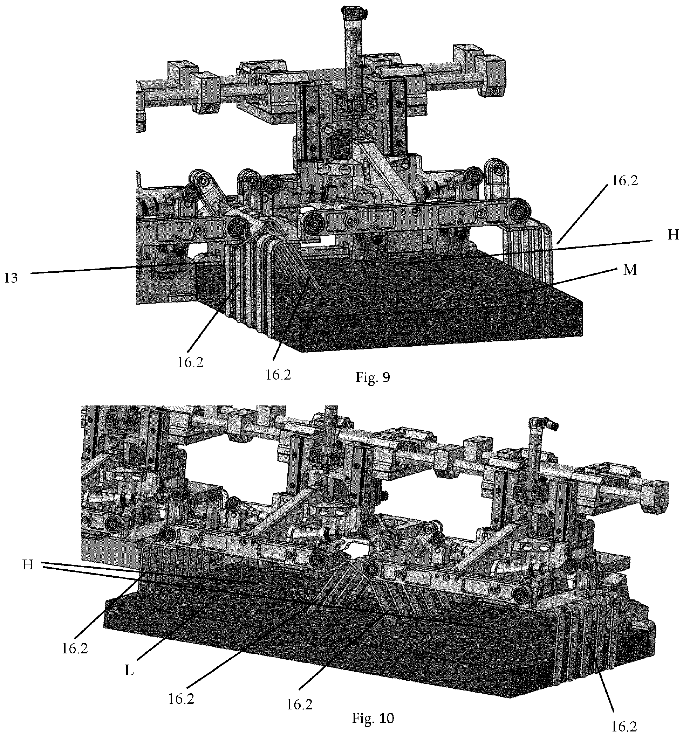

The crate can be clamped with the gripping fingers shown in Figures 8, 9 and 10. It is a paired gripping device located on both longer edges of the segment at the moment of gripping; it works by approaching the crate perpendicular to the longer side of the stack, from above or in the plane of the tier being disassembled, then grasping the crate from the sides by the base or by the edge of the folded sidewalls, clamping, lifting and moving it.

The gripping bars, which are also placed in pairs on both longer edges of the segments, work on a similar principle as the gripping fingers. The bars are L-shaped, and the lower part of the bar always faces each other in pairs. However, they approach the crate from the side at the level of the bottom thereof, and the lower part of the bars are slipped under the bottom. Then, depending on the bar spacing and the crate size, they may or may not clamp the crate with the side parts thereof and then lift and move the crate.

In order to remove the crate from the stack, it is first necessary to lift the crates upwards, and this is the case with the vast majority of industrial and agricultural crates, as such crates have an edge, a stacking edge on the underside of the bottom thereof, no more than 5 cm from the outer edge of the bottom, thanks to which the individual tiers of the crates fit together and the crates are stackable and stacked stably thanks to this edge. Depending on the height of the stacking edge, the lifting height of the crates during disassembly thereof from the mixed stack is also selected. For example, if the stacking edge is 5 mm thick, i.e. the top crate fits into the crate below it by 5 mm, the top crate must be lifted to a height of at least 5 mm to release the top crate. As the stacking edge usually has a sideways clearance of at least ±5 mm, the top crate can be lifted at an angle of 45° to 90° to release the crate.

Moving the crates onto the conveyor is carried out after lifting the crates. Once the crates are released, they can be manipulated sidewards. The crates can be moved in a straight linear or arc motion, which is usually sequential. That is, moving from the stack to the conveyor and putting the crate on the conveyor. In the next sequence, the next tier of crates is moved.

The mechanical gripper comprises a grasping bar anchored to the support structure by a movable arm via pivoting connections. The grasping bar is imaginarily divided into four segments placed side by side on the bar, having a length of 39 to 41 cm, There is at least one mechanical grip on each of these bar segments. At the time of gripping, it follows the segments on the tier of the crate stack. As already mentioned, the mechanical gripping of the crate is preferably realized by a clamp or click or by paired gripping fingers or paired gripping bar.

The device for machine-disassembly of a stack is preferably placed in an assembly with at least one of the following extension modules or components:
- Camera and evaluation software

Preferably, a camera is placed above the crate stack, which takes images of the stack and the individual tiers thereof and sends the images to the evaluation software. This software evaluates the position and type - small/large - of the crates located on one tier. Then, the software controls the movement of the grasping bar and guides the mechanical grips to the crates according to the grip type. The software also controls the sorting tray described below.
- Conveyor

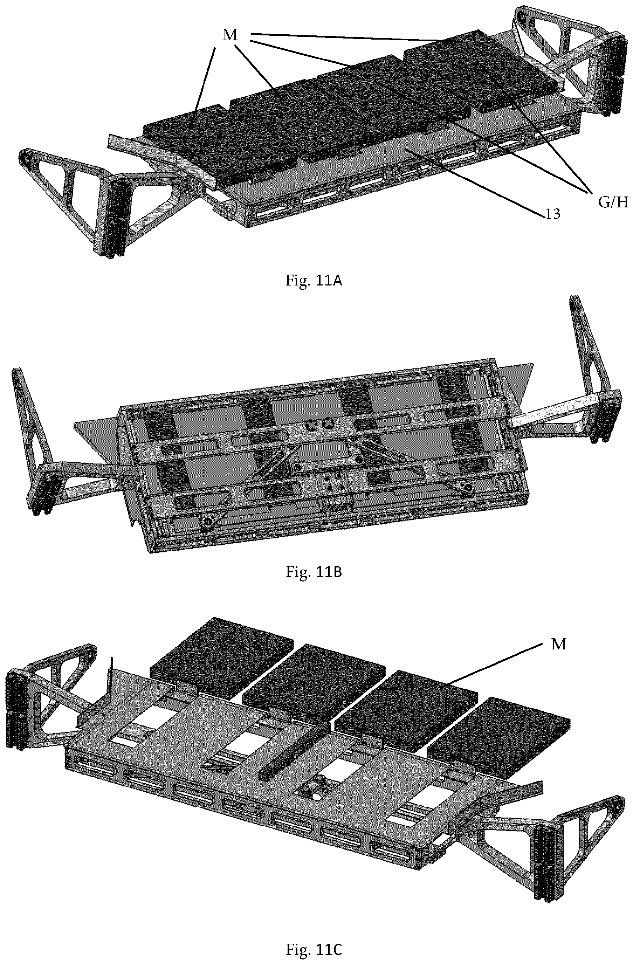

It transports crates from the device for stack disassembly to the sorting tray. Preferably, to save and use space efficiently, the conveyor is vertical, Figures 11, and has an additional extensible mechanism to extend the crates from the conveyor to the next module, namely the sorting tray. Preferably, two vertical conveyors are placed in the assembly below each other, where the upper vertical conveyor serves the upper half of the stack height and transports the crates downwards to the sorting tray located between the upper and lower conveyors. The lower vertical conveyor serves the lower half of the stack height and transports the crates upwards to the sorting tray.
- Sorting tray

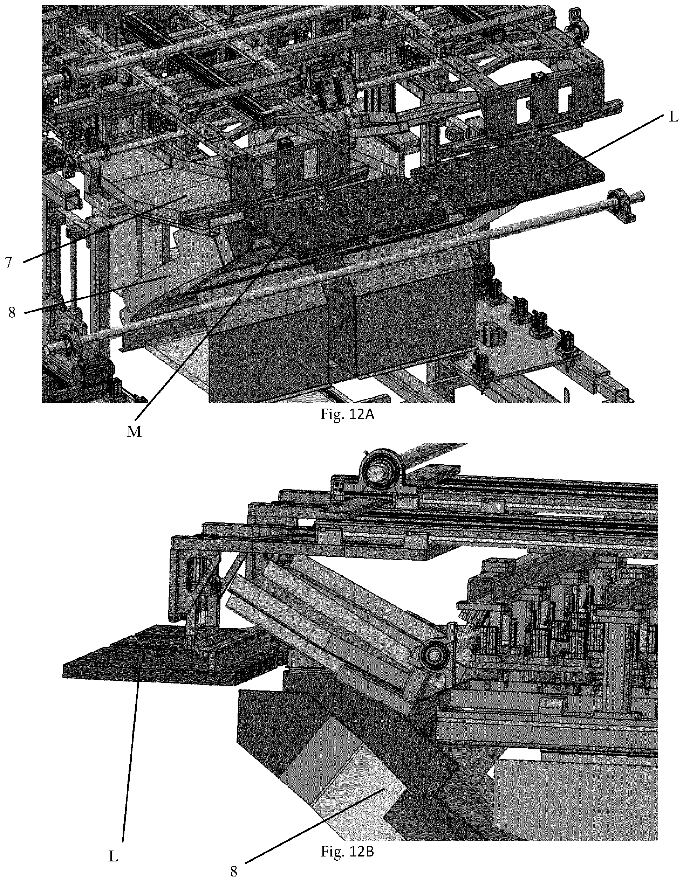

The sorting tray is preferably located between the upper and lower vertical conveyor, Figures 12. The crates are transported to it via these conveyors. Small crates and large crates are separated on the sorting tray. The sorting tray is controlled by the evaluation software as well. If a large crate passes through the system, the software instructs the sorting tray to open the drawbridge, Figure 12B, and the large crate falls onto the directional chute or directional conveyor. If a small crate passes through the system, the drawbridge remains closed, and the small crate passes through the sorting tray directly to the next conveyor.
- Directional chute or conveyor for large crates

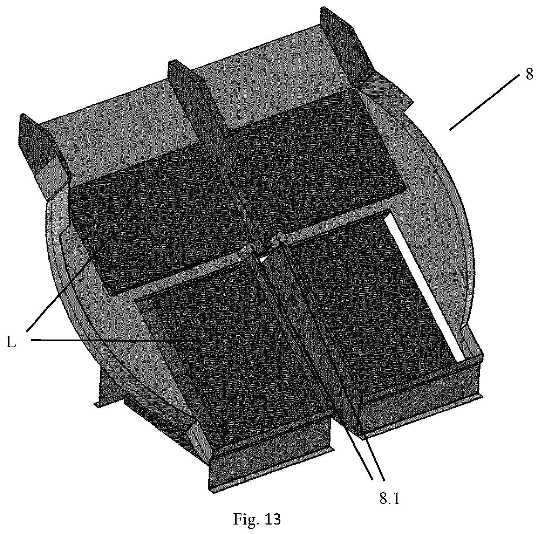

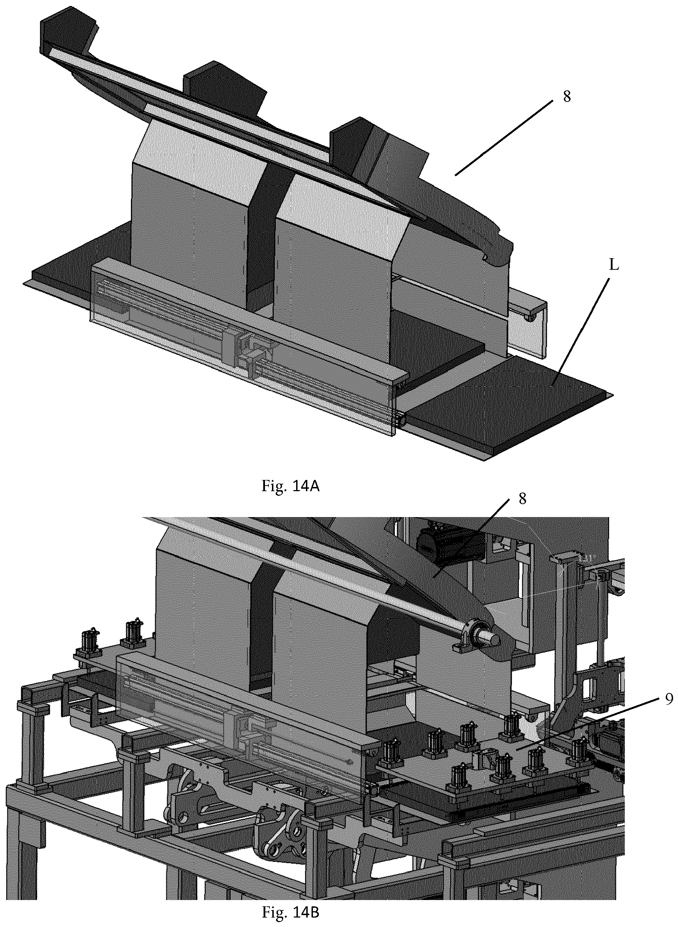

If large crates need to be turned over, a directional chute or directional conveyor is included in the system. Only large crates fallen through the drawbridge of the sorting tray can get in. The directional chute, Figures 13 and 14, is an inclined plane having lateral boards, wherein one board is preferably straight, and the opposite board has the shape of a circle cutout. A directional pin or other stop is placed at the straight board. The crate falls onto the chute with the shorter side forward; one corner of the crate gets stuck on the directional pin or stop, resulting in the crate turning over with the longer side forward. The boards are used to turn the crate over and also direct the crate. In this direction, the crate slides onto the conveyor.
- Conveyor

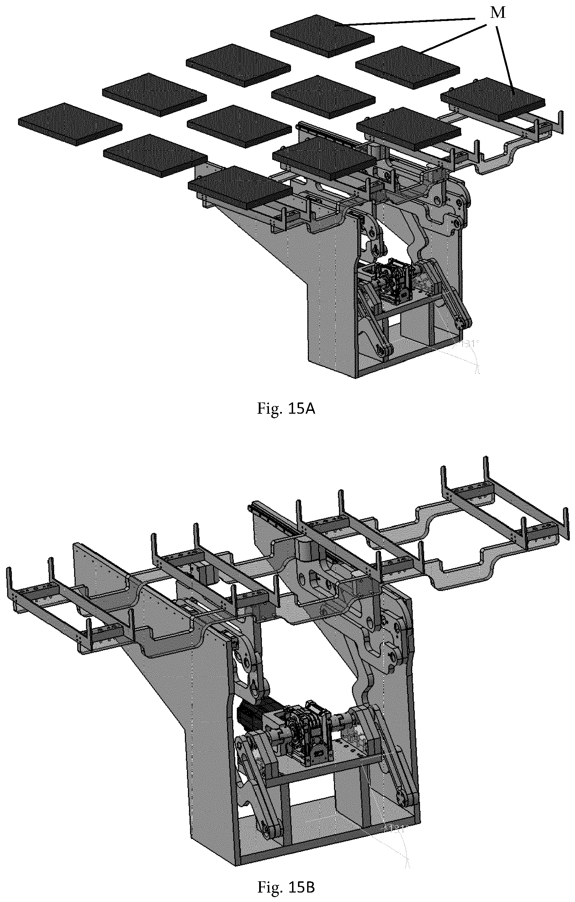

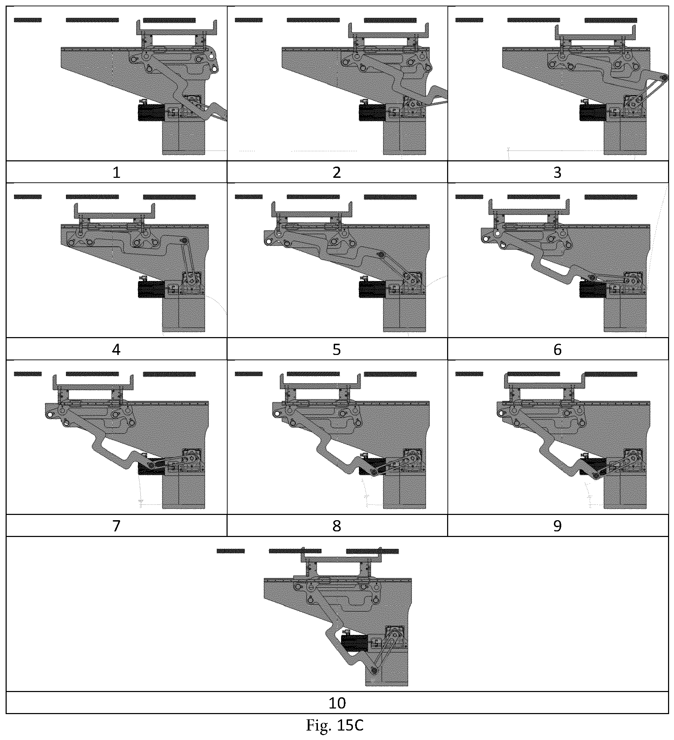

Preferably, the transfer between the chute and the hinge control is realized by a sequential conveyor, Figures 15. In the sequential conveyor, the crates are moved by levers placed on the frame, wherein each lever performs a motion similar to a recumbent ellipse or recumbent rectangle when viewed in profile. At the top of the ellipse/rectangle, the levers move the crate with the movement thereof; as they move down the ellipse/rectangle, the levers go below the level of the crate and return along the bottom of the ellipse/rectangle to the starting position, picking up another crate as they move up the ellipse/rectangle and the process repeats.
- Hinge seating control module

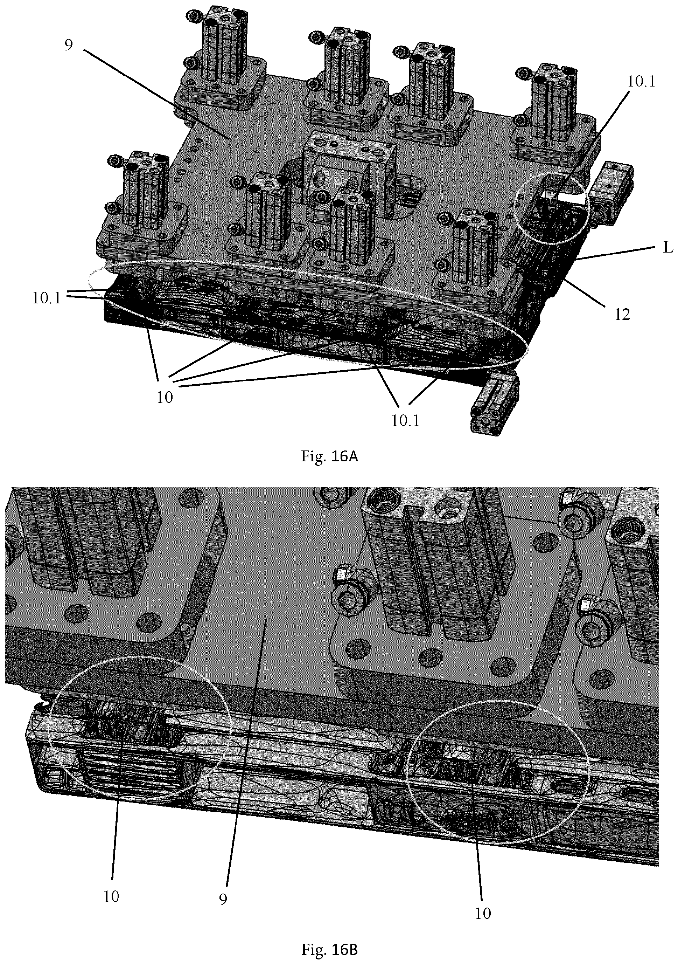

The conveyor transports the crate to the hinge seating control module, Figure 16. This module is important before the actual opening of the crates, as the crates often have slipped hinges and would get stuck in the opening module. Therefore, the hinges are controlled to position the crate below the squeeze pins, wherein each pin is positioned above one hinge. During the control, the pins are driven into the hinges; thus, the slipped hinges are seated, and the seated hinges are not affected in any way. The pins can be placed on a tray and operated all at once, but a relatively high and constant force is required for such an operation to prevent uneven pressure on the individual pins. Therefore, it is more preferable when the movement of each pin is driven separately. From the control module, the crates are transported to the opening module.
- Opening module

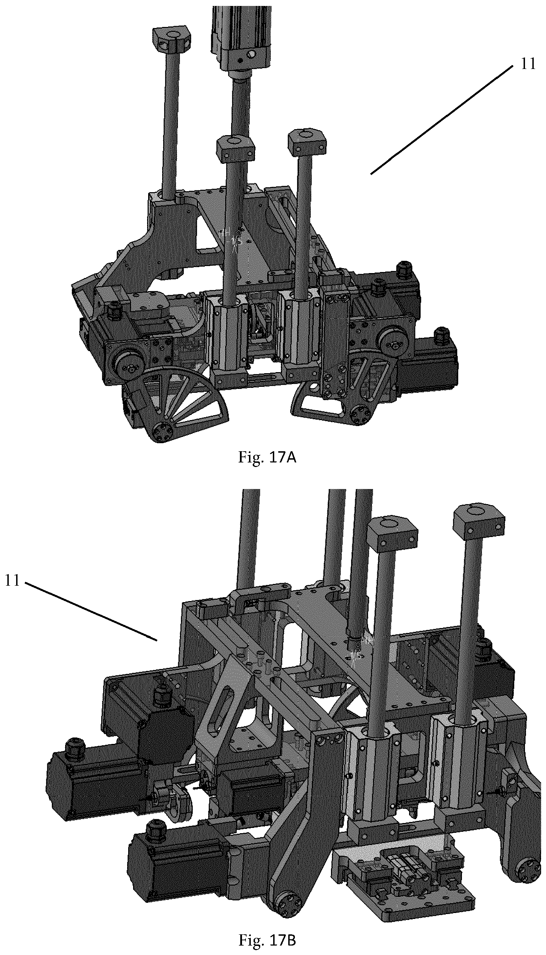

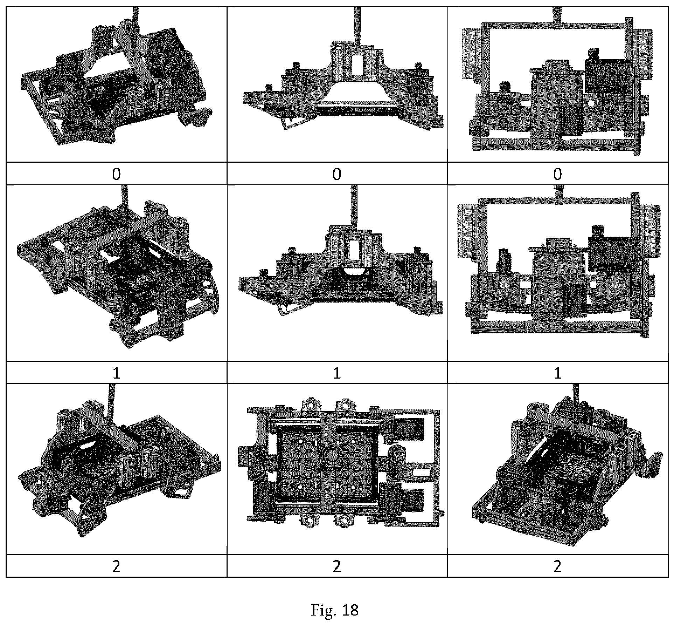

After checking the hinge seating, the crates are transported to the opening module, Figures 17 and 18.

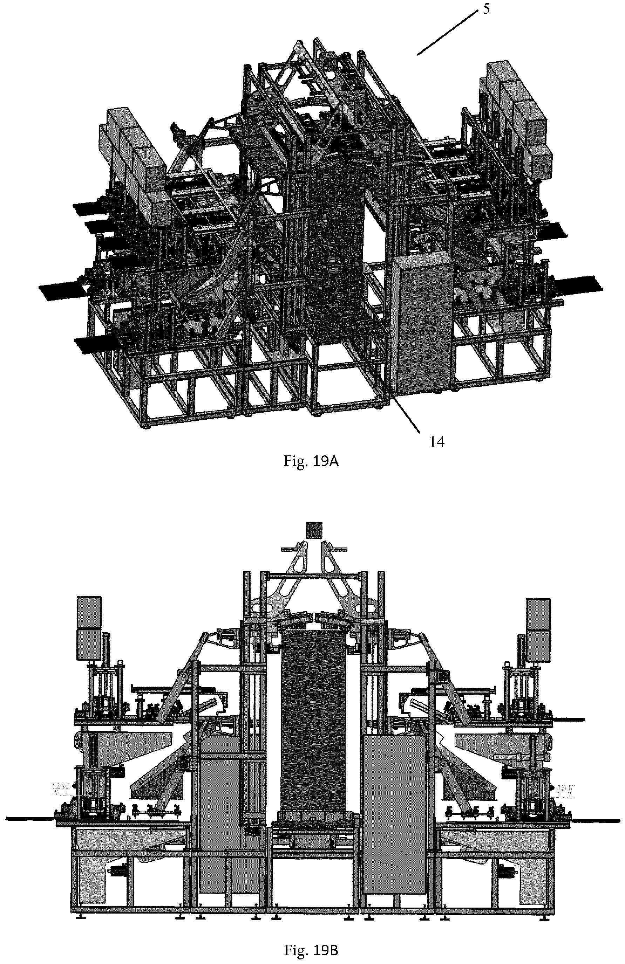

In the most preferred embodiment, all of the above-described components and modules are present in two mirror-opposite copies, Figures 19. This makes it possible to disassemble the entire mixed Euro pallet with two stacks because one side of the set disassembles one stack and the other side of the set disassembles the other stack.

After gripping the crate from the stack, when all crates in one tier are removed simultaneously, each crate is lifted and moved onto the conveyor. These operations are carried out by the device for machine-disassembly of a stack. Then, at least some of the following steps are preferably performed:
- Each crate is transported by conveyor to the sorting tray;
- The sorting tray opens under the large crates and ensures that the large crates fall onto the directional chute or directional conveyor;
- On the directional chute, the large crates are rotated by 90° ± 10° by the directional pin or stop;
- On the directional conveyor, the large crates are rotated by 90° ± 10°;
- After sorting, small crates and large crates are moved onto the conveyor;
- The crates are transported to the hinge seating control module, where each crate hinge is seated by its own pin;
- The crate is transported from the hinge seating control module to the opening module, where the sidewalls are opened starting from the outermost one;
- The open crates are placed on the conveyor.

### SUMMARY

The stack of bound columns of stackable collapsed crates consists of tiers, wherein each tier is divided into four non-overlapping transverse segments of 39 to 41 cm in length and 29 to 31 cm in width, and, at the same time, each tier consisting of two large crates or four small crates or two small crates and one large crate, wherein the small crate has a length of 39 to 41 cm and a width of 29 to 31 cm, and the large crate has a length of 58 to 62 cm, and a width of 39 to 41 cm, the width of the stack is 39 to 41 cm, and the length of the stack is 115 to 125 cm, wherein the stack comprises at least two tiers having a different combination of crates, wherein the combination of crates is selected from the group: MLM, MML, LMM, MMMM, LL,

A method of machine-disassembly of the stack of bound columns of stackable collapsed crates, wherein all crates in one tier are removed simultaneously, wherein each crate is mechanically gripped in at least one point during removal, lifted and moved onto a conveyor. Preferably, each crate is mechanically gripped by clamping, grasping and/or picking up.

All crates in one tier are removed simultaneously. The gripping position of the grasping bar is invariable,

The mechanical grip is located on the grasping bar anchored to the supporting structure of the machine by a movable arm through pivoting connections, wherein the grasping bar is imaginarily divided into four transverse segments placed on the grasping bar side by side, the length of each segment being from 39 to 41 cm.

In each of these transverse segments, there is at least one mechanical grip provided on the bar, wherein these transverse segments of the grasping bar follow the transverse segments on the tier of the crate stack at the time of gripping. The gripping position of the grasping bar is constant, and the grasping bar is located on the longer side of the stack such that the grasping bar with the mechanical grips moves towards the stack and back perpendicular to the longer side of the crate stack, and, at the time of gripping, the mechanical grip is located at the level of the currently disassembled tier of the stack of collapsed crates on the edge of the transverse segments. The mechanical grip consists of a clamp, a gripping click directed along with the movable structure to the stopping surface, or paired gripping fingers. All of the collapsed crates in one tier are removed simultaneously by grasping each crate's side's base in at least one point. Then the mechanical grip with the gripped crate is lifted, moved over the conveyor, the clamping of the mechanical grip is released, whereby the gripped crate is dropped onto the conveyor. The stack is one tier lower, and the entire removed tier is disassembled into individual crates which are positioned on the conveyor.

Preferably, each crate is transported by the conveyor to the sorting tray, which opens under the large crates and ensures the large crates fall onto the directional chute where the large crates are rotated by 90° by the directional pin, or onto the directional conveyor where the large crates are rotated by 90°; after sorting, the small crates and the large crates are moved onto the conveyor transporting them to the hinge seating control module where each hinge of the crate is seated by its own pin. The crate is transported from the hinge seating control module to the opening module, where the sidewalls are opened starting from the outermost one, and finally, the open crates are placed on the conveyor.

The device for machine-disassembly of a stack has a take-out module having a grasping bar anchored to a supporting structure of the take-out module by a movable arm via pivoting connections, wherein the movable arm is driven. The grasping bar has at least four mechanical grips arranged in transverse segments, wherein the four transverse segments are positioned one after another on the grasping bar. Each transverse segment has a width of 39 to 41 cm, wherein at least one mechanical grip is positioned in each transverse segment.

The mechanical grip is preferably a hook, clamp, or click.

Preferably, it has at least eight mechanical grips, wherein at least two mechanical grips are arranged in each transverse segment.

Preferably, the mechanical grip is gripping fingers or gripping bars.

Preferably, the drive is an electric motor or a piston.

Summary of presented drawings
- Fig. 1A:: Stack of bound columns of stackable collapsed crates - individual tiers MLM tier
- Fig. 1B: Stack of bound columns of stackable collapsed crates - individual tiers MML tier
- Fig. 1C: Stack of bound columns of stackable collapsed crates - individual tiers LMM tier
- Fig. 1D: Stack of bound columns of stackable collapsed crates - individual tiers MMMM tier
- Fig. 1E: Stack of bound columns of stackable collapsed crates - individual tiers LL tier
- Fig. 2A: Stack of bound columns of stackable collapsed crates, examples of tier arrangements - 5-tier combination ABCDE
- Fig. 2B: Stack of bound columns of stackable collapsed crates, examples of tier arrangements - 5-tier combination ABACA
- Fig. 2C: Stack of bound columns of stackable collapsed crates, examples of tier arrangements - 5-tier combination EDEDE
- Fig. 2D: Stack of bound columns of stackable collapsed crates, examples of tier arrangements - 5-tier combination EEEED
- Fig. 2E: Stack of bound columns of stackable collapsed crates, examples of tier arrangements - 5-tier combination DEEEE
- Fig. 2F: Stack of bound columns of stackable collapsed crates, examples of tier arrangements - 5-tier combination CABCA
- Fig. 2G: Stack of bound columns of stackable collapsed crates, examples of tier arrangements - 25-tier combination
- Fig. 3: Device for machine-disassembly of a stack of bound columns of collapsed crates - removal arm, front side view
- Fig. 4: Device for machine-disassembly of a stack of bound columns of collapsed crates - removal arm, detail of gripping click to grip the large crates
- Fig. 5: Device for machine-disassembly of a stack of bound columns of collapsed crates - removal arm, detail of gripping click to grip the small crates

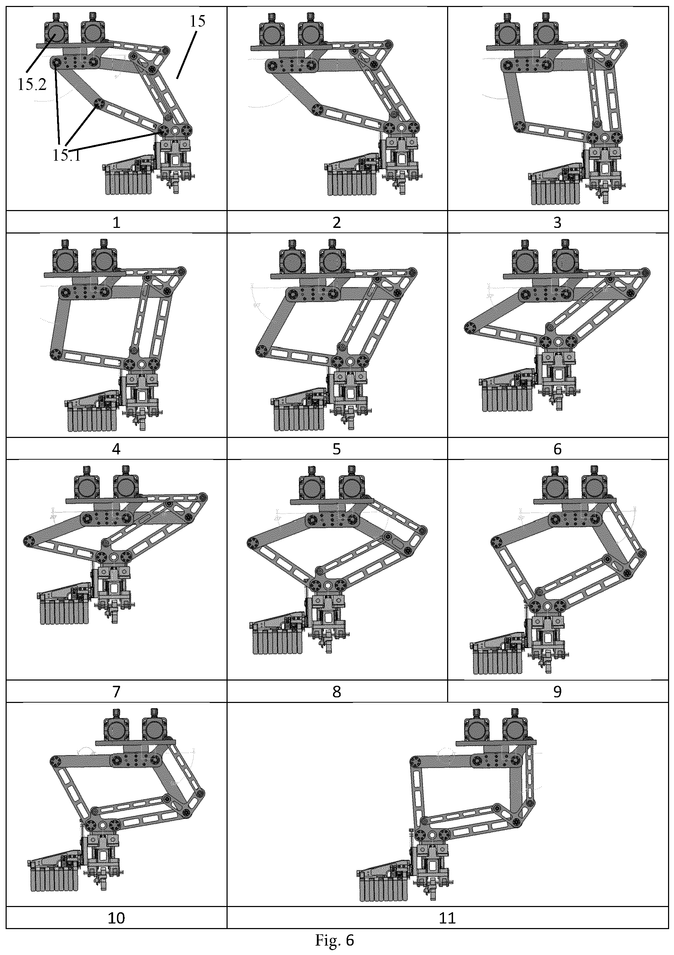

- Fig. 6: Device for machine-disassembly of a stack of bound columns of collapsed crates - sequence of the removal arm movement

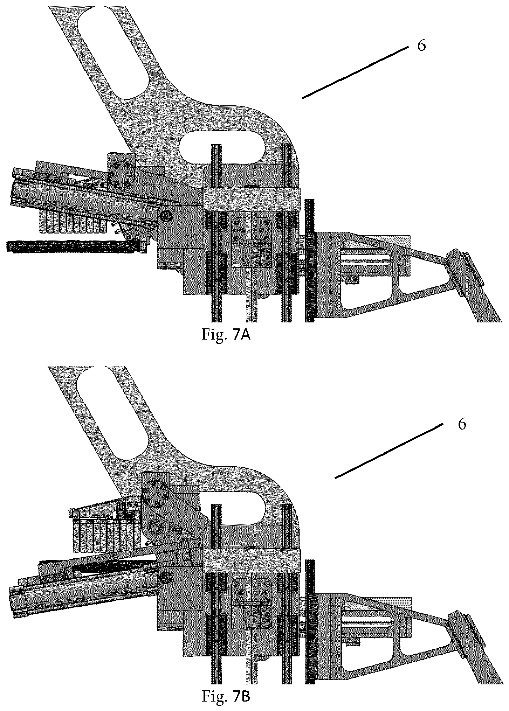

- Fig. 7A: Device for machine-disassembly of a stack of bound columns of collapsed crates - drive of the removal arm movement
- Fig. 7B: Device for machine-disassembly of a stack of bound columns of collapsed crates - drive of the removal arm movement
- Fig. 8A: Device for machine-disassembly of a stack of bound columns of collapsed crates - removal arm, detail of gripping fingers, top view
- Fig. 8B: Device for machine-disassembly of a stack of bound columns of collapsed crates - removal arm, detail of gripping fingers, bottom view
- Fig. 9: Device for machine-disassembly of a stack of bound columns of collapsed crates - removal arm, gripping fingers for removing the small crates, detail of the utmost set of fingers
- Fig. 10: Device for machine-disassembly of a stack of bound columns of collapsed crates - removal arm, gripping fingers for removing the large crates
- Fig. 11A: Extension of the device for machine-disassembly of a stack of bound columns of collapsed crates - vertical conveyor, top view, with four small crates
- Fig. 11B: Extension of the device for machine-disassembly of a stack of bound columns of collapsed crates - vertical conveyor, bottom view
- Fig. 11C: Extension of the device for machine-disassembly of a stack of bound columns of collapsed crates - vertical conveyor, top view, with four small crates extended from the conveyor
- Fig. 12A: Extension of the device for machine-disassembly of a stack of bound columns of collapsed crates - sorting tray with two small crates and one large crate
- Fig. 12B: Extension of the device for machine-disassembly of a stack of bound columns of collapsed crates - sorting tray with an open drawbridge
- Fig. 13: Extension of the device for machine-disassembly of a stack of bound columns of collapsed crates - directional chute for large crates
- Fig. 14A: Extension of the device for machine-disassembly of a stack of bound columns of collapsed crates - move of the crate via drawbridge through the directional chute into the sidewall control module
- Fig. 14B: Extension of the device for machine-disassembly of a stack of bound columns of collapsed crates - move of the crate via drawbridge through the directional chute to the sidewall control module
- Fig. 15A: Extension of the device for machine-disassembly of a stack of bound columns of collapsed crates - sequential conveyor with small crates shown, move of the crate into the sidewall control module
- Fig. 15B: Extension of the device for machine-disassembly of a stack of bound columns of collapsed crates - sequential conveyor, the move of the crate into the sidewall control module
- Fig. 15C: Extension of the device for machine-disassembly of a stack of bound columns of collapsed crates - sequence of the sequential conveyor movement, move of the crate into the sidewall control module
- Fig. 16A: Extension of the device for machine-disassembly of a stack of bound columns of collapsed crates - sidewall control
- Fig. 16B: Extension of the device for machine-disassembly of a stack of bound columns of collapsed crates - sidewall control, detail
- Fig. 17A: Extension of the device for machine-disassembly of a stack of bound columns of collapsed crates - opening module, view from the side of the opening fans
- Fig. 17B: Extension of the device for machine-disassembly of a stack of bound columns of collapsed crates - opening module, view from the side of the motors
- Fig. 18: Extension of the device for machine-disassembly of a stack of bound columns of collapsed crates - opening module, crate opening sequence
- Fig. 19A: Overall view of the two-module device for machine-disassembly of a stack of bound columns of collapsed crates with the extension of vertical conveyor, sorting tray, directional chute, sequential conveyor, sidewall control, and opening module; top side view
- Fig. 19B: Overall view of the two-module device for machine-disassembly of a stack of bound columns of collapsed crates with the extension of vertical conveyor, sorting tray, directional chute, sequential conveyor, sidewall control, and opening module; side view

### Examples of Invention Execution

### Example 1 Stacking

The Euro pallet 1 was set up to stack contaminated used collapsed fruit crates in a supermarket warehouse with limited storage space. Only two sizes of crates were used in the store, namely the small crate M with a length of 40 cm and a width of 30 cm, and the large crate L with a length of 60 cm and a width of 40 cm. These crates were brought from the sales area to the warehouse one by one and stacked on the Euro pallet 1 so that they always filled the entire area of pallet 1, 120 cm long and 80 cm wide. Pallet 1 was gradually filled with large crates L and small crates M, wherein one of the following combinations was stacked in each stack 3 of bound crate columns 2, as required:
small crate (M) - large crate (L) - small crate (M);
small crate (M) - small crate (M) - large crate (L);
large crate (L) - small crate (M) - small crate (M);
small crate (M) - small crate (M) - small crate (M)-- small crate (M);
large crate (L) - large crate (L);

Figure 1A. In such a way, two stacks 3 of bound columns 2 of a mix of small crates M and large crates L were created on pallet 1. A part of one of the stacks 3 of bound crate columns 2 is shown in Figure 2G. One and the other stack 3 of bound crate columns 2 were 120 cm long and 40 cm wide at the base. As the number of tiers 4 of stack 3 of bound crate columns 2 increased, the individual crates came apart more and more, until, at the height of 2 m, stack 3 of bound crate columns 2 was 124 cm long and 40 cm wide, as two large crates L were placed at the top to stabilize the width of the stack 3 of bound crate columns 2.

Example 2A of the device for machine-disassembly of a stack according to Example 1, clicks Device 5 for machine-disassembly of stack 3 is provided with the take-out module 6. The take-out module 6 comprises a steel grasping bar 13, 120 cm long, 1 cm thick and 5 cm wide, wherein the two shorter sides of the grasping bar 13 are connected to the end of the movable arm 15 via pivoting connections 15.1. The pivoting connections 15.1 are realized by a sliding sleeve with an arrested pin. The movable arm 15 is also a steel bar, 5 cm wide and 80 cm long. The other end of the movable arm 15 is again connected to the support structure 14 of the take-out module 6 via the pivoting connection 15.1. The movable arm 15 is provided with two piston drives 15.2 of the arm 15, located between the movable arm 15 and the supporting structure 14 of the take-out module 6 and the movable arm 15 and the grasping bar 13. The grasping bar 13 is imaginarily divided into 4 transverse segments G, where each transverse segment G has a width of 40 cm. One mechanical grip 16, which is a steel gripping click 16.1, is located in each transverse segment G. Therefore, gripping clicks 16.1 are positioned in lengths of grasping bar 13 of 20, 45, 75 and 100 cm. The gripping clicks 16.1 have the shape shown in Figure 4 and are also similarly positioned - i.e. arranged on a movable structure with guiding pins placed perpendicularly to each other and allowing two directions of movement - downwards at an angle of 60° to engage the gripping click 16.1 into the profiled base of the crate, and horizontally to press the crate against the grasping bar 13. The drive of this movement is mediated by an electric motor.

Example 2B of the device for machine-disassembly of a stack according to Example 1, fingers Device 5 for machine-disassembly of stack 3 is provided with the take-out module 6. The take-out module 6 comprises a steel grasping bar 13, 120 cm long, 1 cm thick and 5 cm wide, wherein the two shorter sides of the grasping bar 13 are connected to the end of the movable arm 15 via pivoting connections 15.1. The pivoting connections 15.1 are realized by a joint. The movable arm 15 is made of two steel bars with a diameter of 2 cm and a length of 50 cm, connected together by a joint. The other end of the movable arm 15 is again connected to the support structure 14 of the take-out module 6 via the joint. The movable arm 15 is provided with the drive 15.2 of the arm 15 - an electric motor for the movement of the arm 15. The grasping bar 13 is imaginarily divided into 4 transverse segments G, where each transverse segment G has a width of 40 cm. Two mechanical grips 16, which are paired gripping fingers 16.2, are located in each transverse segment G. The gripping fingers 16.2 are shown in Figure 8. The gripping fingers 16.2 are positioned in lengths of grasping bar 13 of 0, 29.5, 30.5, 59.5, 60.5, 85.5, 90.5, and 120 cm. The gripping fingers 16.2 are connected via a hinge to a structure that includes a piston drive arranged between one set of gripping fingers 16.2 and the structure, thereby allowing controlled tilting of the gripping fingers 16.2 in the hinges. The piston drive of the gripping fingers 16.2 allows both tipping and clamping of the gripping fingers 16.2 and the gripping of the crate. The tilting of the gripping fingers 16.2 is important when processing the large crate L, where the large crate L is gripped by the gripping fingers 16.2 with a spacing of 60 cm and the two sets of gripping fingers 16.2 placed between these active sets must be tilted to prevent collision with the large crate L. In contrast, adjacent sets of gripping fingers 16.2 with a spacing of 30 cm are used to grip the small crate M.

Example 3 of the device for machine-disassembly of a stack according to Example 1, extension Device 5 for machine-disassembly of stack 3 is provided with the camera for sensing the pallet 1 location area, the evaluation software, and the take-out module 6. The take-out module 6 comprises a steel grasping bar 13, 120 cm long, 1 cm thick and 5 cm wide, wherein the two shorter sides of the grasping bar 13 are connected to the end of the movable arm 15 via pivoting connections 15.1. The pivoting connections 15.1 are realized by a joint. The movable arm 15 is made of four steel bars with a length of 3× 40 cm and 30 cm, connected together by a joint. The other end of the movable arm 15 is again connected to the support structure 14 of the take-out module 6 via the joint. The movable arm 15 is provided with the drive 15.2 of the arm 15 - two electric motors for the movement of the arm 15. The grasping bar 13 is imaginarily divided into 4 transverse segments G, where each transverse segment G has a width of 40 cm. Two mechanical grips 16, which are paired gripping fingers 16.2 according to Example 2, are located in each transverse segment G. Furthermore, the grasping bar 13 is also fitted with four mechanical grips 16 - gripping clicks 16.1 according to Example 1.

Further, two vertical conveyors are arranged one above the other on the support structure 14 of the take-out module 6, wherein the lower conveyor is used for the height of 0 to 1 m, and the upper conveyor is used for the height of 1 to 2 m. The vertical conveyor has a conveying area of 130 cm × 45 cm. The sorting tray 7 is located at the height of 1 m, adjacent to both vertical conveyors. The sorting tray 7 is a horizontal platform having dimensions also 130 cm × 45 cm, provided with a drawbridge covering a 50cm wide opening. The drawbridge is operated by a piston, and the piston is controlled by the evaluation software. There is the directional chute 8 under the sorting tray 7 to rotate two large crates L side by side, containing an inclined plane, boards on the sides and, in the middle of the height thereof, 5 cm from the board the directional pin 8.1. The directional chute 8 is connected to the sequential conveyor. The sequential conveyor is realized by a set of four pegs for one crate arranged on a movable frame. The frame and the pegs move along a rectangular track. The sequential conveyor is driven by a geared electric motor. The sequential conveyor is connected to the hinge 10 seating control module 9, where stop pins 10.1 are placed to seat the hinge 10 corresponding to the hinge 10 position on the given type of crate. Each pin 10.1 for seating hinge 10 is operated by its own electric motor and is vertically movable. The hinge 10 seating control module 9 is connected to the crate opening module 11, which is a set of pins, gears, and drives. The pins are located on quarter-circle arms, having the centre of rotation in the centre of the circle, driven by motors. The pins are arranged in pairs according to the crate size so that the opposing pins engage in the profiling of one sidewall 12 of the crate from both sides and open the sidewall by the synchronous movement of the two quarter-circle arms. If the sidewall 12 of the crate is lower than half of the base, two opposite sidewalls 12 of the crate are opened simultaneously by four pins. If the height of crate sidewall 12 is higher than half of the base, the sidewalls 12 of the crate are opened one by one, starting with the uppermost collapsed one. The same mechanism is positioned perpendicular to the first openers for crate sidewalls 12 to open the remaining two sidewalls 12 of the crate.

The opening module 11 for opening the sidewalls is followed by a conventional conveyor belt transporting the opened crates for further processing, such as a washing line.

### Example 4 Method of disassembling the stack according to Example 1 using the device according to Example 2

Pallet 1 with a stacked stack 3 of bound columns 2 of a mix of large crates L and small crates M having dimensions 40 × 124 × 200 cm is introduced into device 5 for machine-disassembly of the stack 3 according to Example 2. The take-out module 6 approaches the top tier 4 of the crates in the bound column 2 of stack 3 at an angle of 60°, and all the gripping clicks 16.1 fit into the profiled bases of the crates. The gripping clicks 16.1 are then brought closer to the grasping bar 13, thereby squeezing the crates between the gripping click 16.1 and the grasping bar 13. Thus, all crates in one tier 4 of crates in a bound column 2 are gripped. Then, all the crates in one tier 4 of crates in the bound column 2 are lifted by 3 cm and moved onto the conveyor by the movement of the movable arms 15 of the grasping bar 13. In this way, the entire stack 3 of bound columns 2 of mixed small crates M and large crates L can be disassembled.

### Example 5 Method of disassembling the stack according to Example 1 using the device according to Example 3

Euro pallet 1 with two unloaded stacks 3 of bound crate columns 2 according to example 1 was introduced into device 5 for machine-disassembly of the stack 3 of crates according to Example 3.

Pallet 1 with a stacked stack 3 of a mix of large crates L and small crates M having dimensions 84 × 124 × 200 cm is introduced into device 5 for machine-disassembly of the stack 3 of crates according to Example 3. A camera placed above stack 3 of bound crate columns 2 senses stack 3 of bound crate columns 2 and the individual crate tiers 4 thereof in bound column 2, and sends the information to the evaluation software (SW). The SW evaluates the size of the crates and their position within the crate tier 4 in the bound column 2 and provides information to the take-out module 6 according to Example 2, which approaches the top crate tier 4 in the bound column 2 of stack 3 of bound crate columns 2 at an angle of 60°, and all gripping clicks 16.1 engage into the profiled crate bases. The gripping clicks 16.1 are then brought closer to the grasping bar 13, thereby squeezing the crates between the gripping click 16.1 and the grasping bar 13. Thus, all crates in one tier 4 of crates in a bound column 2 are gripped. Then, all the crates in one tier 4 of crates in the bound column 2 are lifted by 3 cm and moved onto the conveyor by the movement of the movable arms 15 of the grasping bar 13. In this way, the entire stack 3 of bound columns 2 of mixed small crates M and large crates L can be disassembled. If one of the crates is damaged - which is evaluated by the SW, the whole crate tier 4 in the bound column 2 is disassembled using the gripping fingers 16.2. Thus, SW instructs the gripping fingers 16.2 based on the size and location of the crates in the crate tier 4 in the bound column 2; a pair of gripping fingers 16.2 per crate is always activated. The gripping fingers 16.2 approach the crates from above and engage into the space between the crates. They then grip the crate from the sides and move it onto the vertical conveyor by moving the movable arms 15 of the grasping bar 13. It moves the crates to the sorting tray 7 with a drawbridge controlled by SW. If the small crate M is detected on pallet 1 and then further in the system - the drawbridge remains closed, and the small crate M passes via the sorting tray 7 for further processing. If the large crate L is detected, the drawbridge is opened, and the large crate L falls onto the directional chute 8. At the directional chute 8, the large container L is rotated by 90° and slides onto the sequential conveyor transporting the large container L to the hinge 10 seating control module 9.

In the hinge 10 seating control module 9, all the hinges 10 of the crate are driven. From the hinge 10 seating check module 9, the crate is transported to the opening module 11, which opens the sidewalls 12 of the crate starting from the outermost, that is the uppermost, one of them. If the sidewall 12 of the crate is lower than half of the crate base, two opposite sidewalls 12 of the crate are opened simultaneously by four pins. If the height of crate sidewall 12 is higher than half of the base, the sidewalls 12 of the crate are opened one by one, starting with the uppermost collapsed one. From the opening module 11, the crate is moved to the conveyor.

### List of marks for terms

- 1.: Pallet
- 2.: Bound crate column
- 3.: Stack of bound crate columns 2
- 4.: Tier of crates in bound column 2
- 5.: Device for machine-disassembly of the stack 3
- 6.: Take-out module
- 7.: Sorting tray
- 8.: Directional chute 8.1 Directional pin
- 9.: Hinge 10 seating control module
- 10.: Crate hinge 10.1 Pin for hinge 10 seating
- 11.: Opening module
- 12.: Crate sidewalls
- 13.: Grasping bar
- 14.: Supporting structure of the take-out module 6
- 15.: Movable arm 15.1 Pivoting connection 15.2 Drive of the arm 15
- 16.: Mechanical grip 16.1 Gripping click 16.2 Gripping fingers

- M: Small crate, 39 to 41 cm by 29 to 31 cm
- L: Large crate, 39 to 41 cm by 58 to 62 cm
- G: Transverse segment of the stack
- H: Transverse segment of the grasping bar

### Industrial Applicability

Sorting the stacks of crates to re-put them into service, for example, before the washing process.

## Claims

1. Method of machine disassembly of a stack (3) of bound columns (2) of folded stackable crates, **characterized in that** a stack (3) of bound columns (2) of crates, consisting of tiers (4), wherein each tier (4) is divided into four non-overlapping transverse segments (G) of 39 to 41 cm in length and 29 to 31 cm in width, and, at the same time, each tier (4) consisting of two large crates (L) or four small crates (M) or two small crates (M) and one large crate (L), wherein the small crate (M) has a length of 39 to 41 cm and a width of 29 to 31 cm, and the large crate (L) has a length of 58 to 62 cm and a width of 39 to 41 cm, a width of the stack is 39 to 41 cm and a length of the stack is 115 to 125 cm, wherein the stack (3) comprises at least two tiers (4) having a different combination of crate sizes, wherein the combination of crate sizes is selected from the group:
small crate (M) - large crate (L) - small crate (M);
small crate (M) - small crate (M) - large crate (L);
large crate (L) - small crate (M) - small crate (M);
small crate (M) - small crate (M) - small crate (M) - small crate (M);
large crate (L) - large crate (L);
is machine-disassembled using a mechanical grip located on thae grasping bar (13) anchored to a machine supporting structure by a movable arm through pivoting connections, wherein the grasping bar (13) is imaginarily divided into four segments (H) arranged on the grasping bar (13) side by side, each segment having a length of from 39 to 41 cm, at least one mechanical grip (16) being positioned on the bar (13) in each of these transverse segments (H), wherein these transverse segments (H) of the grasping bar (13) follow the transverse segments (G) on the tier of the stack (3) of crates at a time of gripping, a gripping position of the grasping bar (13) is constant and the grasping bar (13) is positioned on the long side of the stack (3) and the grasping bar (13) with the mechanical grips (16) moves towards the stack (3) and back perpendicularly to a longer side of the stack (3) of crates and, at the time of gripping, the mechanical grip (16) is positioned at a level of a currently disassembled tier of the stack (3) of collapsed crates at an edge of the transverse segments (G), wherein the mechanical grip (16) consists of a clamp, a gripping click (16.1) directed along a movable structure towards a stopping surface, or paired gripping fingers (16.2), wherein all the collapsed crates in one tier (4) are removed simultaneously by gripping in at least one point of a base side of each crate, by a raised edge of the base side of the crate or a side(s) of folded sidewalls thereof that engage into a raised edge, and then, the mechanical grip with a gripped crate is lifted, moved over a conveyor, a clamping of the mechanical grip is released, whereby the gripped crate is dropped onto the conveyor and the stack (3) is one tier (4) lower and the entire removed tier (4) is disassembled into individual crates which are located on the conveyor.

2. Method of machine-disassembly of the stack (3) of bound crate columns (2) according to claim 1, **characterized in that** the gripping fingers (16.2) approach the crate from above and grasp the crate from the sides.

3. Method of machine-disassembly of the stack (3) of bound crate columns (2) according to claim 1, **characterized in that** the gripping click (16.1) is directed along with the movable structure towards the stopping surface and pulls the crate and arrives with the edge to the stopping surface, thereby fixing the crate for lifting.

4. Method of machine-disassembly of the stack (3) of bound crate columns (2) according to claim 1, **characterized in that** the stopping surface is the grasping bar (13).

5. Device (5) for machine-disassembly of the stack (3) according to the method of claim 1, **characterized in that** it comprises a take-out module (6) provided with the grasping bar (13) anchored to the supporting structure (14) of the take-out module (6) by a movable arm (15) via pivoting connections (15.1), wherein the movable arm (15) is provided with a drive (15.2), and the grasping bar (13) has at least four mechanical grips (16) and is imaginarily divided into four segments arranged side by side on the grasping bar (13), wherein each segment has a width of 39 to 41 cm, and, in each segment, there is at least one mechanical grip (16), which is the gripping click (16.1) directed along with the movable structure towards the stopping surface or paired gripping fingers (16.2).

6. Device (5) for machine-disassembly of the stack (3) according to claim 5, **characterized in that** the stopping surface is the grasping bar (13).

7. Device (5) for machine-disassembly of the stack (3) according to claim 7, **characterized in that** the gripping fingers (16.2) have a spacing of 30 cm in one pair.

8. Device (5) for machine-disassembly of the stack (3) according to claim 5, **characterized in that** the drive (15.2) of the arm (15) is an electric motor or a piston.
